(19) Europäisches Patentamt
European Patent Office
Office européen des brevets

(11) **EP 3 118 677 A1**

(12) **EUROPEAN PATENT APPLICATION**

(43) Date of publication:
**18.01.2017 Bulletin 2017/03**

(21) Application number: **16179495.3**

(22) Date of filing: **14.07.2016**

(51) Int Cl.:
*G03B 13/36* (2006.01)          *G02B 7/02* (2006.01)
*G02B 7/09* (2006.01)          *G02B 7/28* (2006.01)
*G02B 27/64* (2006.01)          *H04N 5/225* (2006.01)
*G03B 3/10* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.07.2015   CN 201510424284**

(71) Applicants:
• **Sunming Technologies (HK) Limited
Tuen Mun, Hong Kong (CN)**

• **Lam, Sio Kuan
Tuen Mun, Hong Kong (CN)**

(72) Inventor: **Lam, Sio Kuan
Tuen Mun, Hong Kong, Hong Kong (CN)**

(74) Representative: **Becker Kurig Straus
Patentanwälte
Bavariastrasse 7
80336 München (DE)**

(54) **MINIATURE LENS DRIVING APPARATUS AND ELECTRONIC IMAGE-CAPTURING DEVICE**

(57)     A miniature lens driving apparatus includes a housing, at least two strings, an optical image stabilization (OIS) mechanism, and an autofocus (AF) mechanism. The OIS mechanism includes a lens holder. The AF mechanism includes an AF moving holder, an upper spring sheet, and a lower spring sheet. An internal connecting portion and an outer connecting portion of the upper spring sheet are connected to an upper end of the AF moving holder and a stationary part of the AF mechanism, respectively. An internal connecting portion and an outer connecting portion of the lower spring sheet are connected to a lower end of the AF moving holder and the stationary part of the AF mechanism, respectively. The two ends of each of the at least two strings are connected to the lens holder and a lower portion of the AF moving holder, respectively. An electronic image-capturing device is also disclosed.

FIG. 1

Printed by Jouve, 75001 PARIS (FR)

EP 3 118 677 A1

## Description

### CROSS-REFERENCE TO RELATED APPLICATIONS

The present application claims the benefit of Chinese Patent Application No. 201510424284.1 filed on July 17, 2015, the entire content of which is hereby incorporated by reference.

### TECHNICAL FIELD

The present invention relates to a lens driving apparatus, and more particularly to a miniature lens driving apparatus and an electronic image-capturing device including the miniature lens driving apparatus.

### BACKGROUND

An autofocus (AF) lens based on a voice coil motor (VCM) already becomes a standard configuration in high-end camera phones or smart phones. In addition to AF, optical image stabilization (OIS) is becoming the trend in the market, and soon a lens provided with both AF and OIS will become a new standard configuration in high-end camera phones or smart phones. Therefore, it is necessary to provide a lens driving apparatus having both AF and OIS.

### SUMMARY

An objective of the present invention is to provide a miniature lens driving apparatus having functions of AF and OIS. Since the function of AF requires a lens to move along a direction of an optical axis (that is, the Z axis), and the function of OIS requires the lens to move along a direction perpendicular to the optical axis (that is, any direction in an XY plane), an objective of the present invention is also to provide a miniature lens driving apparatus that can move a lens along the X, Y, and Z axes.

There is provided a miniature lens driving apparatus, including a housing, at least two strings, an OIS mechanism, and an AF mechanism, wherein the OIS mechanism comprises a lens holder for holding an imaging lens, at least two coils, and at least one permanent magnet, and the at least two coils and the at least one permanent magnet are operatively associated with each other, to move the lens holder along a direction substantially perpendicular to an optical axis of the imaging lens; the AF mechanism comprises an AF moving holder capable of moving back and forth along a direction of the optical axis, at least one coil, at least one permanent magnet, an upper spring sheet, and a lower spring sheet, and the at least one coil and the at least one permanent magnet are operatively associated with each other, to move the AF moving holder along the direction of the optical axis; an internal connecting portion of the upper spring sheet is connected to an upper end of the AF moving holder, and an outer connecting portion of the upper spring sheet is connected to a stationary part of the AF mechanism; and an internal connecting portion of the lower spring sheet is connected to a lower end of the AF moving holder, and an outer connecting portion of the lower spring sheet is connected to the stationary part of the AF mechanism; and one end of each of the at least two strings is connected to the lens holder, and another end of each of the at least two strings is connected to a lower portion of the AF moving holder.

In an embodiment of the miniature lens driving apparatus according to the present invention, an effective elasticity coefficient of the lower spring sheet is greater than an effective elasticity coefficient of the upper spring sheet.

In an embodiment of the miniature lens driving apparatus according to the present invention, a material of the upper spring sheet is different from a material of the lower spring sheet. In an embodiment of the miniature lens driving apparatus according to the present invention, the upper spring sheet or the lower spring sheet has an integral structure or is formed of multiple independent spring sheet units.

In an embodiment of the miniature lens driving apparatus according to the present invention, the outer connecting portion of the upper spring sheet or the lower spring sheet further includes an electrode portion for connecting the coil and an external circuit.

In an embodiment of the miniature lens driving apparatus according to the present invention, one end of the string is connected to the lens holder, and another end of the string is connected to the internal connecting portion of the lower spring sheet.

In an embodiment of the miniature lens driving apparatus according to the present invention, the OIS mechanism and the AF mechanism share at least one permanent magnet.

In an embodiment of the miniature lens driving apparatus according to the present invention, a reinforcing piece is disposed at the lower end of the AF moving holder for increasing the rigidity of the AF moving holder to resist deformation. The lower end of the AF moving holder is connected to an internal connecting portion of the lower spring sheet by using the reinforcing piece. The reinforcing piece may first be fixed at the lower end of the AF moving holder, and is then connected to the internal connecting portion of the lower spring sheet, to form a layer order of the AF moving holder, the reinforcing piece, and the lower spring sheet, or the internal connecting portion of the lower spring sheet may be located between the reinforcing piece and the lower end of the AF moving holder, to form a layer order of the AF moving holder, the lower spring sheet, and the reinforcing piece.

In an embodiment of the miniature lens driving apparatus according to the present invention, a string connecting piece is disposed at an upper end of the lens holder, and an upper end of the string is connected to the string connecting piece. In another embodiment of the miniature lens driving apparatus according to the present invention, the string connecting piece may be integrated into the lens holder.

In an embodiment of the miniature lens driving apparatus according to the present invention, a circuit is disposed on the string connecting piece.

In an embodiment of the miniature lens driving apparatus according to the present invention, the string connecting piece is a printed circuit board in which a circuit is disposed thereon.

In an embodiment of the miniature lens driving apparatus according to the present invention, the string includes a wire selected from a group formed of a metal wire, an enameled metal wire, a metal-clad metal wire, a metal-clad plastic wire, an electrically-conductive organic fiber wire, and combinations thereof.

In an embodiment of the miniature lens driving apparatus according to the present invention, a material of the string includes a material selected from a group formed of an electrically conductive material, a non-electrically conductive material, a polymer material, plastic, rubber, and organic fibers.

Another objective of the present invention is to provide an electronic image-capturing device, including the foregoing miniature lens driving apparatus.

The implementation of the miniature lens driving apparatus of the present invention has the following advantageous effects: The miniature lens driving apparatus of the present invention includes an AF mechanism and also includes an OIS mechanism, so that functions of AF and OIS can both be implemented. Moreover, an effective elasticity coefficient of a lower spring sheet is greater than an effective elasticity coefficient of an upper spring sheet. Since a relatively rigid lower spring sheet is used, the performance of the OIS mechanism is more superior.

## BRIEF DESCRIPTION OF THE DRAWINGS

The present invention is further described below with reference to the accompanying drawings and embodiments, where:

FIG. 1 is a schematic structural diagram of an embodiment of a miniature lens driving apparatus according to the present invention;
FIG. 2a to FIG. 2d are schematic diagrams of an upper spring sheet of a miniature lens driving apparatus according to the present invention;
FIG. 3a to FIG. 3d are schematic diagrams of a spring sheet system of a miniature lens driving apparatus according to the present invention;
FIG. 4a to FIG. 4c are schematic diagrams of an embodiment of a miniature lens driving apparatus according to the present invention;
FIG. 5a to FIG. 5c are schematic structural diagrams of an OIS mechanism of a miniature lens driving apparatus according to the present invention;

FIG. 6a to FIG. 6c are schematic structural diagrams of an AF mechanism of a miniature lens driving apparatus according to the present invention;
FIG. 7a is a schematic structural diagram of a string being connected to an OIS mechanism and an AF mechanism in a miniature lens driving apparatus according to the present invention;
FIG. 7b is an enlarged diagram of a portion A in FIG. 7a;
FIG. 8a is a schematic structural diagram of a string being connected to an OIS mechanism in a miniature lens driving apparatus according to the present invention; and
FIG. 8b is a schematic structural diagram of a string being connected to an AF mechanism in a miniature lens driving apparatus according to the present invention.

## DETAILED DESCRIPTION

For the purpose of understanding the technical features, objectives and effects of the present invention more clearly, specific embodiments of the present invention are illustrated in detail with reference to accompanying drawings. In the following detailed description, numerous specific details are set forth to provide a thorough understanding of claimed subject matter. However, it will be understood by those skilled in the art that claimed subject matter may be practiced without these specific details. In other instances, methods, apparatuses, or systems that would be known by one of ordinary skill have not been described in detail so as to avoid rendering claimed subject matter unclear.

Reference throughout this specification to "one embodiment" or "an embodiment" may mean that a particular feature, structure, or characteristic described in connection with a particularly embodiment may be included in at least one embodiment of claimed subject matter. Thus, appearances of the phrase "in one embodiment" or "an embodiment" in various places throughout this specification are not necessarily intended to refer to the same embodiment or to any one particular embodiment described. Furthermore, it is to be understood that particular features, structures, or characteristics described may be combined in various ways in one or more embodiments. In general, of course, these and other issues may vary with the particular context of usage. Therefore, the particular context of the description or the usage of these terms may provide helpful guidance regarding inferences to be drawn for that context.

Likewise, the terms, "and", "and/or," and "or" as used herein may include a variety of meanings that also is expected to depend at least in part upon the context in which such terms are used. Typically, "or" as well as "and/or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe some combination of features, structures, or characteristics. Though, it should be noted that this is merely an illustrative example and claimed subject matter is not limited to this example.

As described in the specification, it should be understood that orientation or positional relationships indicted by terms "front", "rear", "above", "below", "upper end", "lower end", "upper", "lower" and so on, are based on those illustrated in the drawings, only for ease of description of the present invention and to simplify the description, but not to indicate or imply that referred devices or components must have a particular orientation, or constructed and operated with the particular orientation. Therefore, these illustrations cannot be construed as limiting the present invention. Accordingly, "upper" and "lower" may be equivalently interchanged with "top" and "bottom", "first" and "second", "right" and "left", and so on.

It should be noted that throughout the specification and claims herein, when one element is said to be "coupled" or "connected" to another, this does not necessarily mean that one element is fastened, secured, or otherwise attached to another element. Instead, the term "coupled" or "connected" means that one element is either connected directly or indirectly to another element or is in mechanical or electrical communication with another element.

It should be understood that the protection is not limited to the preferred embodiments described hereinabove and, needless to say, a variety of modifications or variations may be made without departing from the scope of the protection defined herein.

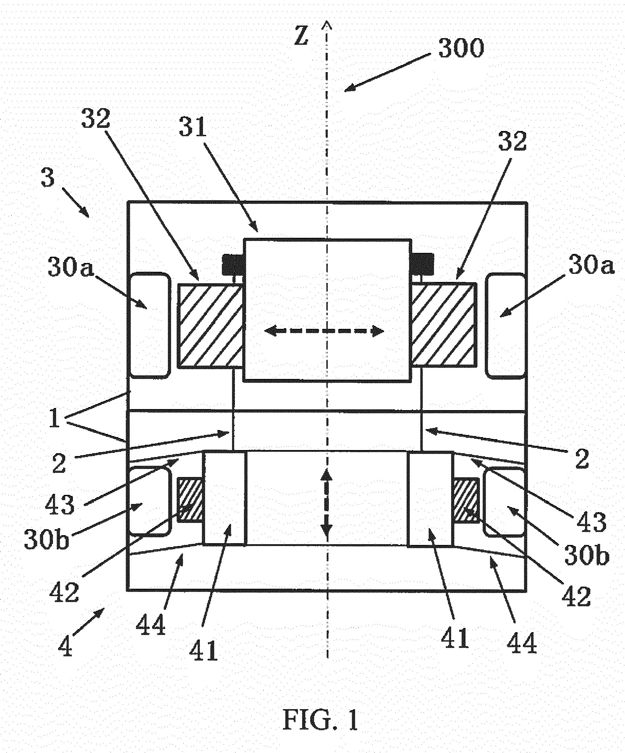

FIG. 1 is a schematic diagram of an embodiment of a miniature lens driving apparatus according to the present invention. As shown in FIG. 1, the miniature lens driving apparatus provided by the present invention includes a housing 1, at least two strings 2, an OIS mechanism 3, and an AF mechanism 4. The OIS mechanism 3 includes a lens holder 31 for holding an imaging lens, at least two coils 32, and at least one permanent magnet 30a. The at least two coils 32 and the at least one permanent magnet 30a are operatively associated with each other, to move the lens holder 31 along a direction substantially perpendicular to an optical axis 300 of the lens. The direction of the optical axis 300 is set as a direction of the Z axis, and the direction perpendicular to the optical axis 300 is any direction in an XY plane. The AF mechanism 4 includes an AF moving holder 41 (or referred to as an AF moving platform) that may move back and forth along the direction of the optical axis 300, at least one coil 42, at least one permanent magnet 30b, an upper spring sheet 43, and a lower spring sheet 44. The at least one coil 42 and the at least one permanent magnet 30b are operatively associated with each other, to move the AF moving holder 41 along the direction of the optical axis 300. An internal connecting portion 431 of the upper spring sheet 43 is connected to an upper end of the AF moving holder 41, and an outer connecting portion 432 of the upper spring sheet 43 is connected to a stationary part of the AF mechanism. An internal connecting portion 441 of the lower spring sheet 44 is connected to a lower end of the AF moving holder 41, and an outer connecting portion 442 of the lower spring sheet 44 is connected to the stationary part of the AF mechanism. One end of each of the at least two strings 2 is connected to the lens holder 31, and the other end of each of the at least two strings 2 is connected to the AF moving holder 41. Since the AF moving holder 41 and the lens holder 31 are connected by using the at least two strings 2, the back-and-forth movement of the AF moving holder 41 along the direction of the optical axis 300 is transferred to the lens holder 31 by using the at least two strings 2, which forces the lens holder 31 to follow the AF moving holder 41 to move back and forth consistently along the direction of the optical axis. In this way, the miniature lens driving apparatus of the present invention implements the function of driving the lens holder 31 to move along directions of the X, Y, and Z axes.

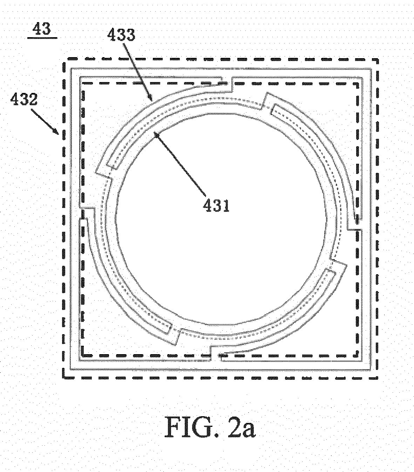

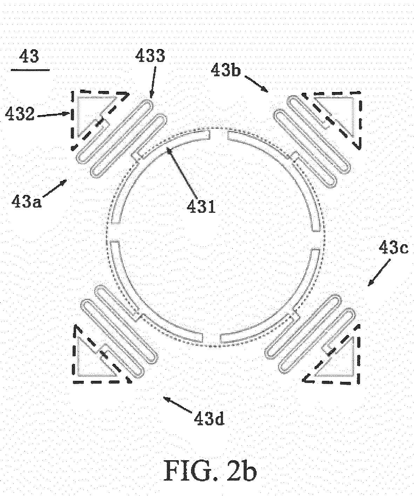

Referring to FIG. 2a and FIG. 2b, in an embodiment of a miniature lens driving apparatus of the present invention, an upper spring sheet 43 may be an independent integral structural spring sheet, as shown in FIG. 2a; or may be formed of multiple independent spring sheet units 43a, 43b, 43c, and 43d, as shown in FIG. 2b. It is defined that a spring sheet system (or referred to as a composite spring sheet) is one spring sheet that is formed of multiple independent spring sheet units and is functionally equivalent to one integral structural spring sheet, and as shown in FIG. 2b, is one upper spring sheet formed of four spring sheet units. Same as the upper spring sheet 43, a lower spring sheet 44 may similarly be an independent integral structural spring sheet, referring to FIG. 2a; or may be formed of multiple independent spring sheet units, referring to FIG. 2b. The structure of the upper spring sheet 43 is used as an example here for explanation. Regardless of being an integral spring sheet or a composite spring sheet, all spring sheets may be divided into three parts, that is, an internal connecting portion 431, an outer connecting portion 432, and an intermediate portion 433. The internal connecting portion 431 of the upper spring sheet 43 is a portion for connecting to an AF moving holder 41, and the outer connecting portion 432 of the upper spring sheet 43 is for connecting to a stationary portion of an AF mechanism or a stationary portion of the miniature lens driving apparatus. The intermediate portion 433 of the upper spring sheet 43 is a portion located between the internal connecting portion 431 and the outer connecting portion 432, and the intermediate portion 433 of the upper spring sheet 43 is a portion for elastic deformation to generate an elastic force. As shown in FIG. 2a to FIG. 2d, the portion enclosed by a thick dotted box is the outer connecting portion 432, the portion enclosed by a thin dotted box is the internal connecting portion 431, and the remaining portion is the intermediate portion 433. The quantities of the internal connecting portions and the outer connecting portions of both the upper spring sheet 43 and the lower spring sheet 44 are not fixed, while at least one internal connecting portion and at least one outer connecting portion are present. Although there are four internal connecting portions and four outer connecting portions in the embodiment shown in FIG. 2b, needless to say, the use of two, three, or more internal connecting portions and outer connecting portions in other embodiments also does not depart from the scope of protection defined herein. In some other embodiments, in addition to the internal connecting portion, the outer connecting portion, and the intermediate portion, a spring sheet further includes an electrode portion 434. The electrode portion 434 is an extended portion of the spring sheet, and does not have a function of deformation, but may be used as an electrode for connecting to the coil so as to enable an external power supply circuit to be electrically connected to the coil by using the extended portion.

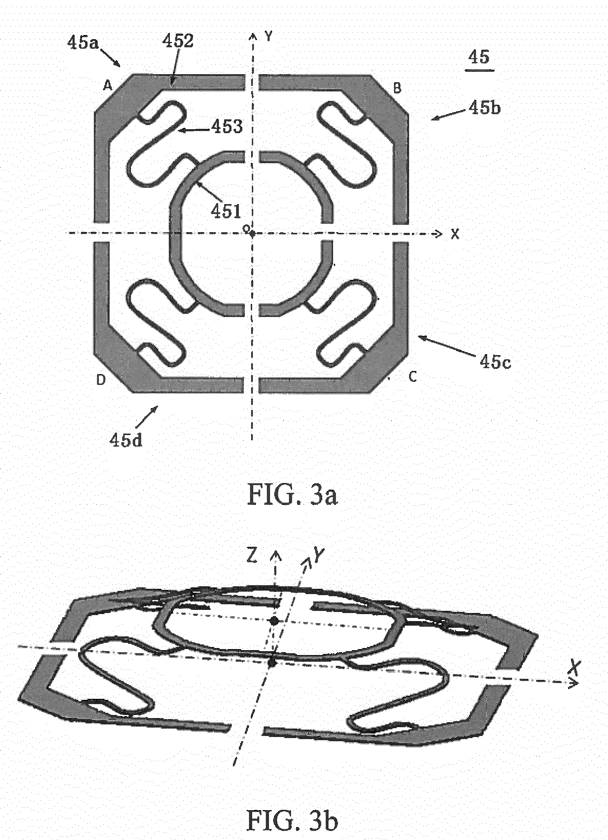

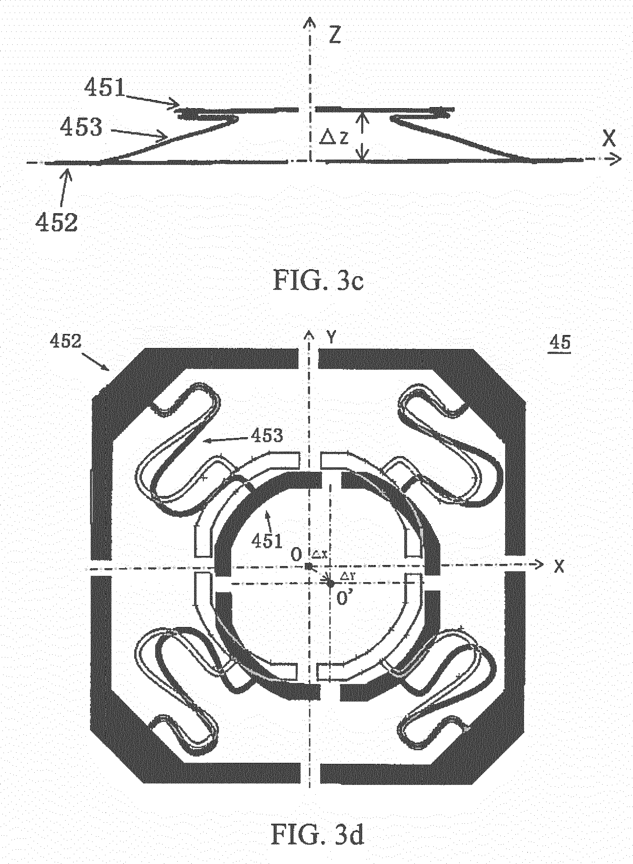

To further describe the performance of the upper lower spring sheet and the lower spring sheet, it is necessary to define effective elasticity coefficients of the upper spring sheet and the lower spring sheet herein. An effective elasticity coefficient is also referred to as an equivalent elasticity coefficient. An effective elasticity coefficient of the spring sheet or the spring sheet system is defined as follows: as shown in FIG. 3a, one planar spring sheet system 45 (or referred to as a composite spring sheet) is formed of four independent spring sheets 45a, 45b, 45c, and 45d. The coordinate system is as defined in FIG. 3a, in which a geometrical center or the center of circle of a connecting ring formed of an internal connecting portion 451 is used as the coordinate origin 0 when the spring sheet system 45 is not deformed. Generally, one circular hole is provided on a lens holder for a lens to pass through and to be mounted on the lens holder. Therefore, the internal connecting portion 451 of the spring sheet system 45 is generally arranged symmetrically about the center of circle of the circular hole. It should be understood that "symmetry" here is only for the purpose of convenient description, but is not an essential condition of the present invention. An XY plane is overlapped with a spring sheet plane, and the Z axis is in a direction perpendicular to the spring sheet plane. In the miniature lens driving apparatus of the present invention, all the internal connecting portions 451 of the spring sheet system 45 are connected to the lens holder, and since the lens holder is rigid, all the internal connecting portions act or move consistently. The outer connecting portions 452 of the spring sheet system 45 are all connected to a housing or a base or connected to an attachment fixed on the housing or the base, and therefore all the outer connecting portions 452 of the spring sheet system 45 are stationary. When a force is applied on the lens holder, the lens holder will move along a direction of the force, to cause displacements of all the internal connecting portions 451 of the spring sheet system 45 consistent with the lens holder, so that intermediate portions 453 of all spring sheet units are correspondingly deformed to generate an elastic force. In a case of static equilibrium, a resultant force f of elastic forces that are generated by all the intermediate portions 453 and an active force F have equal magnitude but opposite directions. In this case, an effective elasticity coefficient may be defined by using the Hooke's law. As shown in FIG. 3b and FIG. 3c, when an active force is applied along a direction of the normal z of a plane of the spring sheet system 45, under the effect of the active force, the lens holder actuates all the internal connecting portions of the spring sheet system 45 to move along z by a distance $\Delta Z$, and it is obtained by using the Hooke's law:

$$F_z = -f_z = -k_z \cdot \Delta Z$$

Therefore, $k_z$ is defined as an effective elasticity coefficient of the spring sheet system 45 along the direction Z. Similarly, as shown in FIG. 3d, when an active force is applied along any direction in the plane of the spring sheet system 45, displacements of the internal connecting portions of the spring sheet system 45 along the direction may be decomposed into displacements $\Delta X$ and $\Delta Y$ in directions X and Y. According to a force decomposition rule, the active force may also be decomposed into component forces in the directions X and Y, and the component forces may be obtained by using the Hooke's law:

$$F_x = -f_x = -k_x \cdot \Delta X$$

$$F_y = -f_y = -k_y \cdot \Delta Y$$

Therefore, $k_x$ and $k_y$ are defined as effective elasticity coefficients of the spring sheet system 45 along the directions X and Y. $f_x$ and $f_y$ are respectively components of a resultant force of an elastic force in the directions X and Y.

In the miniature lens driving apparatus of the present invention, the upper spring sheet 43 and the lower spring sheet 44 of the AF mechanism may have identical structures, or may be not identical. The "identical structures" means that the upper spring sheet 43 and the lower spring sheet 44 have identical geometrical shapes. In a case in which the upper spring sheet 43 and the lower spring sheet 44 have the same material, with the same geometrical shape, the effective elasticity coefficients of the upper spring sheet 43 and the lower spring sheet 44 along the directions X, Y, and Z are also the same, that is, equal. In some embodiments, the upper spring sheet 43 and the lower spring sheet 44 have different structures. Naturally, the effective elasticity coefficients of the upper spring sheet and the lower spring sheet along the directions X, Y, and Z are also different, that is, unequal. However, in some embodiments, despite the upper spring sheet 43 and the lower spring sheet 44 have different structures, by means of delicate design of geometrical shapes, the upper spring sheet 43 and the lower spring sheet 44 that have equal effective elasticity coefficients along the directions X, Y, and Z can still be obtained. In some other embodiments, despite the upper spring sheet 43 and the lower spring sheet 44 have different structures, by means of delicate material design of spring sheets, the upper spring sheet 43 and the lower spring sheet 44 that have equal effective elasticity coefficients along the directions X, Y, and Z can still be obtained. In some other embodiments, despite the upper spring sheet 43 and the lower spring sheet 44 have the same structure, by means of delicate material design of spring sheets, the upper spring sheet 43 and the lower spring sheet 44 may have unequal effective elasticity coefficients along the directions X, Y, and Z.

As can be seen from FIG. 1, in this embodiment, the lens holder 31 of the OIS mechanism 3 is connected to the AF moving holder 41 of the AF mechanism by using at least two strings 2. As shown in FIG. 1, a connecting point between the string 2 and the AF moving holder 41 is at an upper end of the AF moving holder 41. In some other embodiments, the connecting point may be disposed at any location on the AF moving holder 41, for example, at an upper end, a lower end, or a portion between the upper end and the lower end. When the lens holder 31 is subject to an active force in a direction perpendicular to an optical axis of the OIS mechanism, this active force will also be transferred to the AF moving holder 41 by using this connecting point. In a general embodiment, to avoid a movement of the AF moving holder 41 in the direction perpendicular to the optical axis under the effect of the active force, the effective elasticity coefficients of the upper spring sheet 43 and the lower spring sheet 44 along the directions X and Y are greater than the effective elasticity coefficient along the direction Z. In some embodiments, to further restrict the movement of the AF moving holder 41 in the direction perpendicular to the optical axis, effective elasticity coefficients along various directions of spring sheets near the connecting point are set to be greater than those of spring sheets further away from the connecting point. Specifically, if the connecting point is disposed at the upper end or in an area near an upper end surface of the AF moving holder 41, the effective elasticity coefficients along various directions of the upper spring sheet 43 are set to be greater than the effective elasticity coefficients in corresponding directions of the lower spring sheet 44. In contrast, if the connecting point is disposed at the lower end or in an area near a lower end surface of the AF moving holder 41, the effective elasticity coefficients along various directions of the lower spring sheet 44 are set to be greater than the effective elasticity coefficients in corresponding directions of the upper spring sheet 43. Needless to say, all those in the foregoing that are applicable to a spring sheet may also be applied to the spring sheet system (or the composite spring sheet).

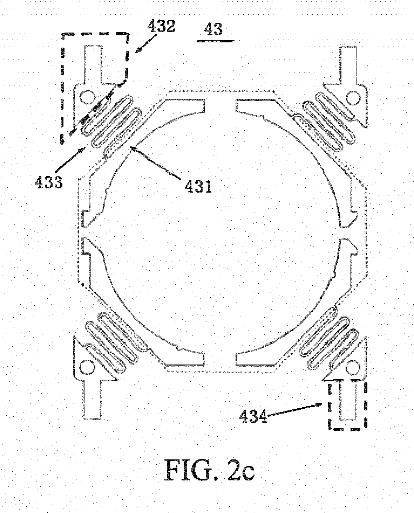

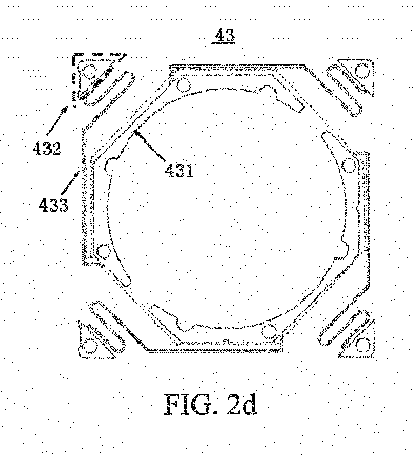

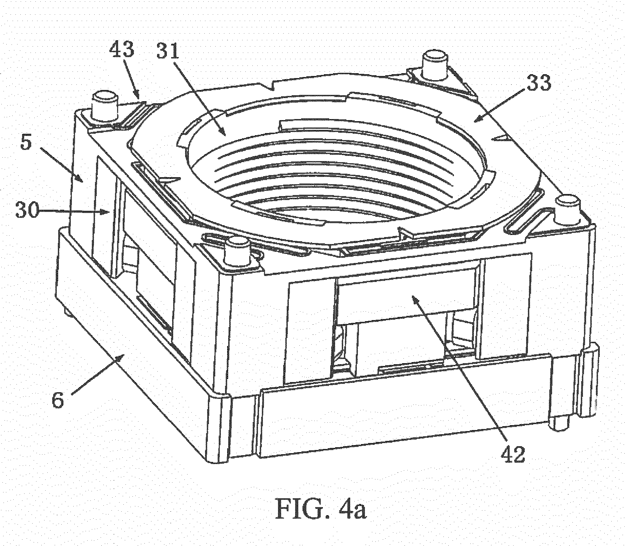

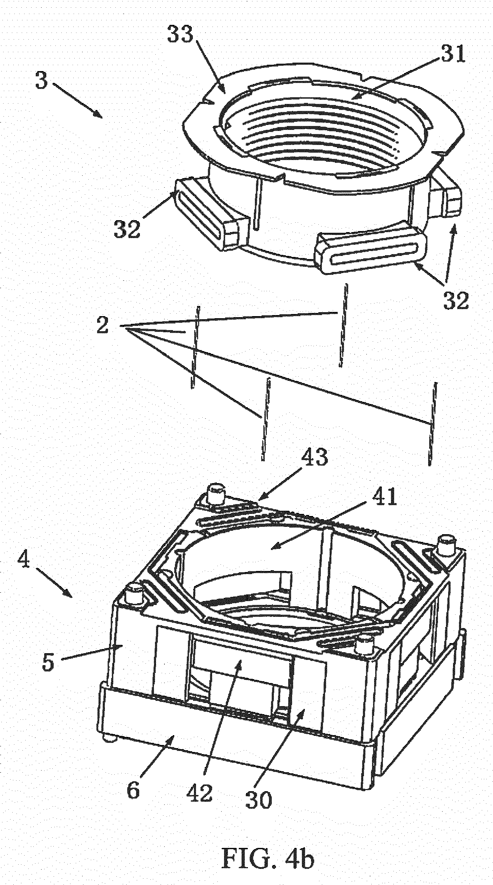

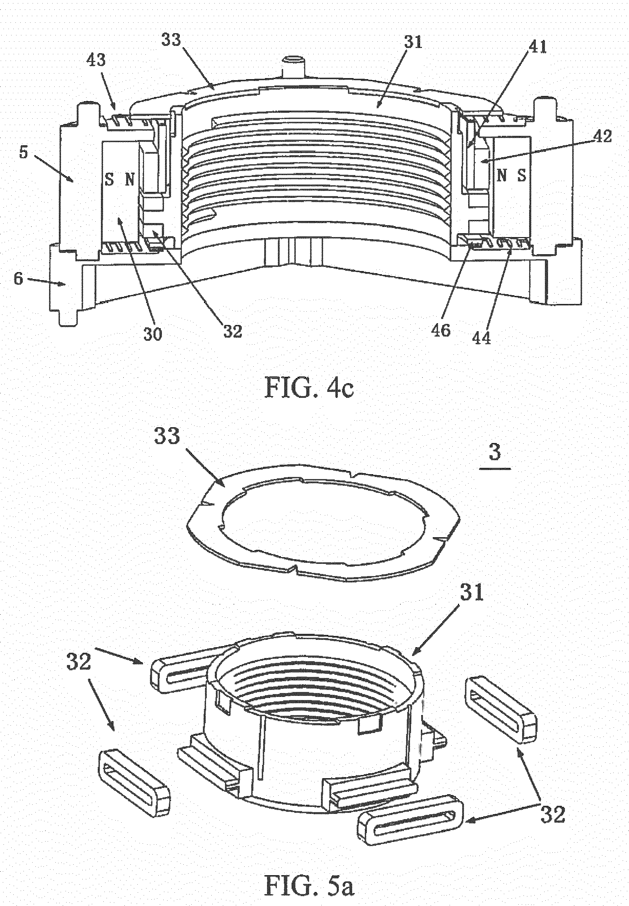

FIG. 4a to FIG. 4c are schematic diagrams of a specific embodiment of a miniature lens driving apparatus according to the present invention. In FIG. 4a to FIG. 4c, as a default member, a housing is not shown. FIG. 4a is a schematic structural diagram. FIG. 4b is a structural exploded diagram. FIG. 4c is a sectional diagram along a diagonal. As shown in FIG. 4a to FIG. 4c, in this embodiment, the miniature lens driving apparatus provided in the present invention includes a housing, at least two strings 2, an OIS mechanism 3, and an AF mechanism 4. The OIS mechanism 3 includes a lens holder 31 for holding a lens. The AF mechanism 4 includes an AF moving holder 41 (or referred to as an AF moving platform), an upper spring sheet 43, and a lower spring sheet 44. One end of the string 2 is connected to the lens holder 31, and the other end of the string 2 is connected to the AF moving holder 41. An internal connecting portion 431 of the upper spring sheet 43 is connected to an upper end of the AF moving holder 41, and an outer connecting portion 432 of the upper spring sheet 43 is connected to a magnet seat 5 or a base 6. An internal connecting portion 441 of the lower spring sheet 44 is connected to a lower end of the AF moving holder 41, and an outer connecting portion 442 of the lower spring sheet 44 is connected to the magnet seat 5 or the base 6. In an embodiment of the present invention, one end of the string 2 is connected to the lower end of the AF moving holder 41, and the other end of the string 2 is connected to an upper end of the lens holder 31. In another embodiment of the present invention, the upper spring sheet 43 and the lower spring sheet 44 of the AF mechanism have identical shapes and structures, and effective elasticity coefficients of the upper spring sheet 43 and the lower spring sheet 44 are also equal. In this embodiment, the upper spring sheet 43 and the lower spring sheet 44 have different shapes and structures (referring to FIG. 2c and FIG. 2d), and the effective elasticity coefficient of the lower spring sheet 44 is greater than the effective elasticity coefficient of the upper spring sheet 43, or in brief, the lower spring sheet 44 is more rigid than the upper spring sheet 43, and is relatively more difficult to deform.

As can be seen from FIG. 4c, in this embodiment, the OIS mechanism 3 and the AF mechanism 4 share at least one permanent magnet 30. A coil 42 of the AF mechanism and an upper portion of the permanent magnet 30 are operatively associated with each other, to generate an electromagnetic force to move the AF moving holder 41 along a direction of an optical axis. A coil 32 of an OIS mechanism and a lower portion of the permanent magnet 30 are operatively associated with each other, to generate an electromagnetic force to move the lens holder 31 along a direction substantially perpendicular to the optical axis. In another embodiment, the vertical positions of the coil 42 of the AF mechanism and the coil 32 of the OIS mechanism are interchangeable.

In this embodiment, the coil 42 of the AF mechanism and the coil 32 of the OIS mechanism are both operatively associated with a surface of the same permanent magnet 30. Although not shown in this specification, a person of ordinary skill in the art would understand that in some other embodiments, the coil 42 of the AF mechanism and the coil 32 of the OIS mechanism may be operatively associated with surfaces of different permanent magnets 30. For example, the coil 42 of the AF mechanism and an N-pole end surface of the permanent magnet 30 are operatively associated with each other, and the coil 32 of the OIS mechanism and an upper end surface or a lower end surface of the permanent magnet 30 are operatively associated with each other.

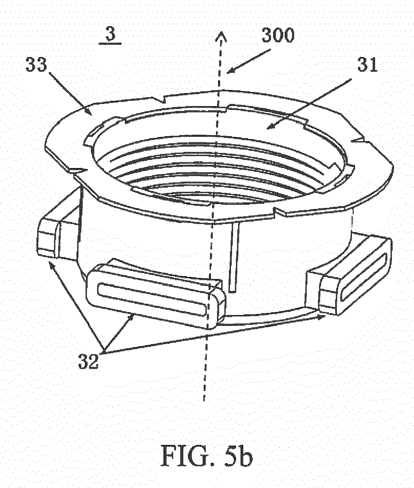

FIG. 5a and FIG. 5b show an embodiment of an OIS mechanism of a miniature lens driving apparatus according to the present invention. In this embodiment, an OIS mechanism 3 of the miniature lens driving apparatus includes a lens holder 31. The lens holder 31 is used for holding a lens. The lens defines an optical axis 300, that is, an axial line of the lens. The lens holder 31 is located at an inner side of an AF moving holder 41, and an OIS coil 32 is disposed at a circumference of the lens holder 31. When being powered, the OIS coil 32 generates an electromagnetic field. The electromagnetic field and a permanent magnet 30 act on each other to move the lens holder 31 along a direction perpendicular to the optical axis of the lens. There are at least two OIS coils 32. In this embodiment, four OIS coils 32 are evenly disposed along the circumference of the lens holder 31. Needless to say, two, three, or even more permanent magnets may be disposed, which also does not depart from the scope of protection defined herein. The permanent magnet 30 that interacts with the OIS coil 32 and the permanent magnet 30 that interacts with the AF coil 42 can be the same permanent magnet 30. The permanent magnets 30 can also be different permanent magnets 30 which interact with the OIS coil 32 and the AF coil 42, respectively.

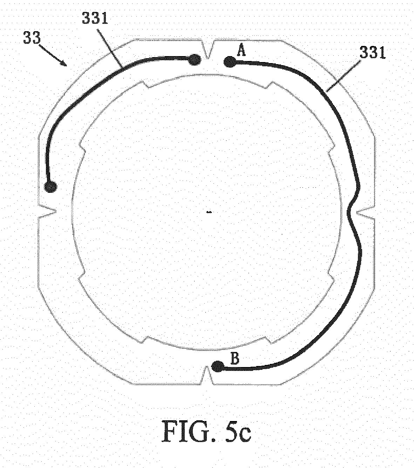

FIG. 5c shows a string connecting piece of the OIS mechanism. A string connecting piece 33 is disposed at an upper end of the lens holder 31. The string connecting piece 33 has a plate-form structure. The string connecting piece 33 may be made of an electrically conductive material, an insulating material, or a composite material, for example, a PCB board. When the string connecting piece 33 is a PCB board, a circuit 331 may be further printed on the string connecting piece 33. Even if an electrically conductive material or an insulating material is used, the circuit 331 may still be disposed on the string connecting piece 33. For example, a point A and a point B on the string connecting piece are electrically connected by using a copper wire. In a case in which an electrically conductive material is used as the string connecting piece 33, insulation processing requires special attention to prevent the circuit from short circuiting. In this embodiment, the string connecting piece 33 is fixed at the upper end of the lens holder 31. In some other embodiments, the string connecting piece 33 may be fixed at any location on the lens holder 31. In some other embodiments, the string connecting piece 33 may be combined with the lens holder 31 to form a whole. In such a case, the string connecting piece 33 may have various structures such as some protrusions, rings, holes, and convex or concave portions on the lens holder 31.

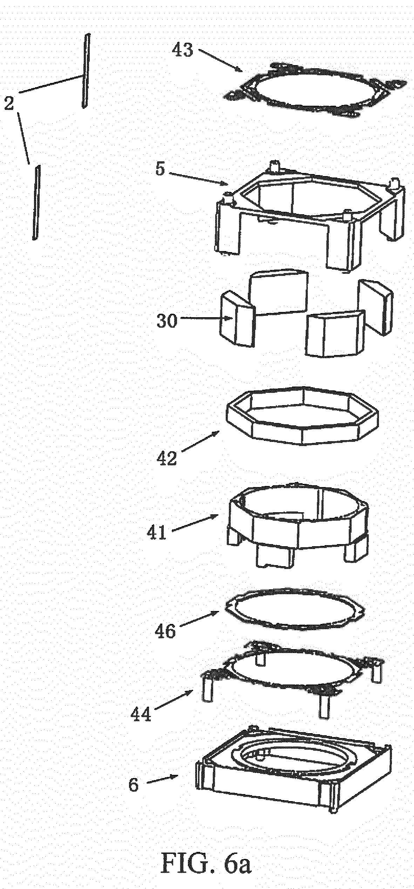

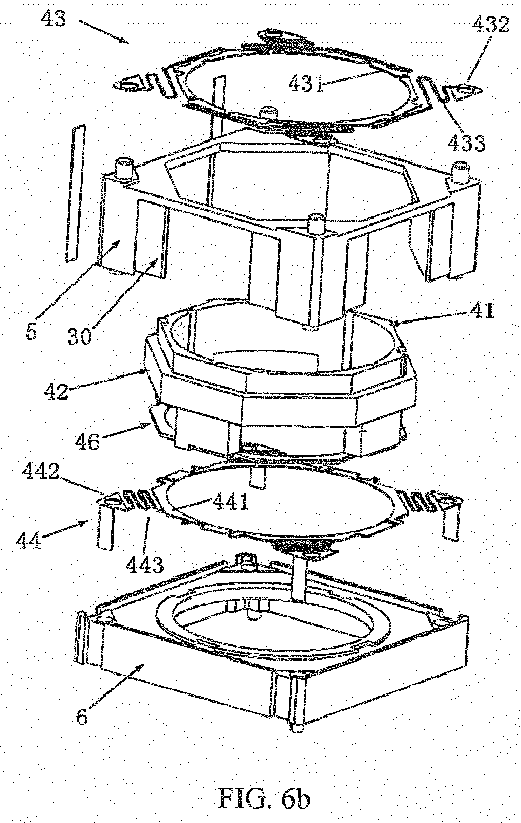

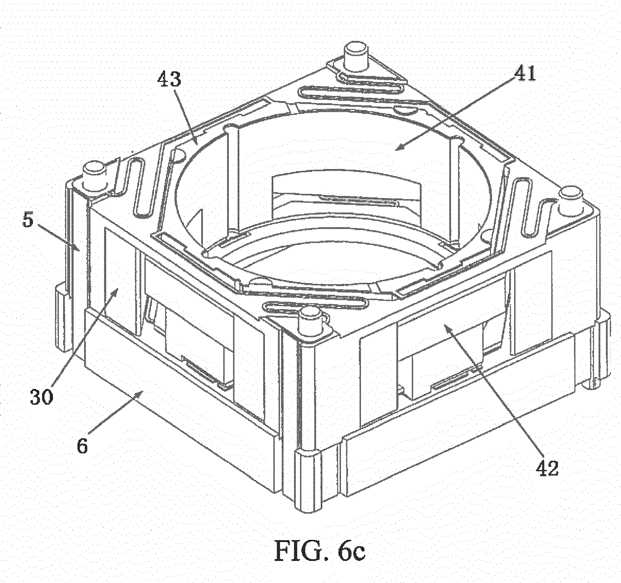

FIG. 6a to FIG. 6c show an embodiment of an AF mechanism of a miniature lens driving apparatus according to the present invention. FIG. 6a is a schematic exploded diagram of an AF mechanism 4. FIG. 6b is a schematic diagram of assembly of a corresponding portion. FIG. 6c is a schematic diagram of the assembled AF mechanism 4. In this embodiment, the AF mechanism 4 includes a base 6, an upper spring sheet 43, a lower spring sheet 44, a magnet seat 5, at least one permanent magnet 30, at least one coil 42, and an AF moving holder 41. The magnet seat 5 is fixed on the base 6. The at least one permanent magnet 30 is fixed on the magnet seat 5. The at least one coil 42 is disposed on the AF moving holder 41, and the at least one coil 42 and the at least one permanent magnet 30 of the AF mechanism are operatively associated with each other to move the AF moving holder 41 along an optical axis. An internal connecting portion 431 of the upper spring sheet 43 is connected to an upper end of the AF moving holder 41, and an outer connecting portion 432 of the upper spring sheet 43 is connected to the magnet seat 5 or the base 6. An internal connecting portion 441 of the lower spring sheet 44 is connected to a lower end of the AF moving holder 41, and an outer connecting portion 442 of the lower spring sheet 44 is connected to the magnet seat 5 or the base 6. In some embodiments of the present invention, the upper spring sheet 43 and the lower spring sheet 44 of the AF mechanism have identical shapes and structures, and the upper spring sheet 43 and the lower spring sheet 44 also have equal effective elasticity coefficients. In this embodiment, the upper spring sheet 43 and the lower spring sheet 44 have different shapes and structures, and the effective elasticity coefficient of the lower spring sheet 44 is greater than the effective elasticity coeffcient of the upper spring sheet 43, or in brief, the lower spring sheet 44 is more rigid than the upper spring sheet 43, and is relatively more difficult to deform.

In this embodiment, to provide the AF moving holder 41 with a more desirable strength and to prevent deformation of the AF moving holder 41, an annular reinforcing piece 46 is disposed at the lower end of the AF moving holder 41 for increasing the rigidity of the AF moving holder 41 so as to resist deformation. The reinforcing piece 46 has a plate-form structure, and may be made of a metal material or a non-metal material, or may be made of a composite material. The lower end of the AF moving holder 41 is connected to the internal connecting portion 441 of the lower spring sheet 44 by using the reinforcing piece 46. Specifically, the reinforcing piece 46 is fixed at the lower end of the AF moving holder 41, and the reinforcing piece 46 is connected to the internal connecting portion 441 of the lower spring sheet 44, so as to form a layer order of the AF moving holder 41, the reinforcing piece 46, and the lower spring sheet 44. In some embodiments, the internal connecting portion 441 of the lower spring sheet 44 is fixed at the lower end of the AF moving holder 41, and the reinforcing piece 46 is connected to the internal connecting portion 441 of the lower spring sheet 44, so as to form a layer order of the AF moving holder 41, the lower spring sheet 44, and the reinforcing piece 46. In some other embodiments, the reinforcing piece 46 is connected to the internal connecting portion 441 of the lower spring sheet 44 to form a composite body. This composite body is fixed at a lower portion, but is not on an end surface, of the AF moving holder 41 by using the reinforcing piece 46 or the internal connecting portion 441 of the lower spring sheet 44. In some other embodiments, the reinforcing piece is also used as a string connecting piece at the same time.

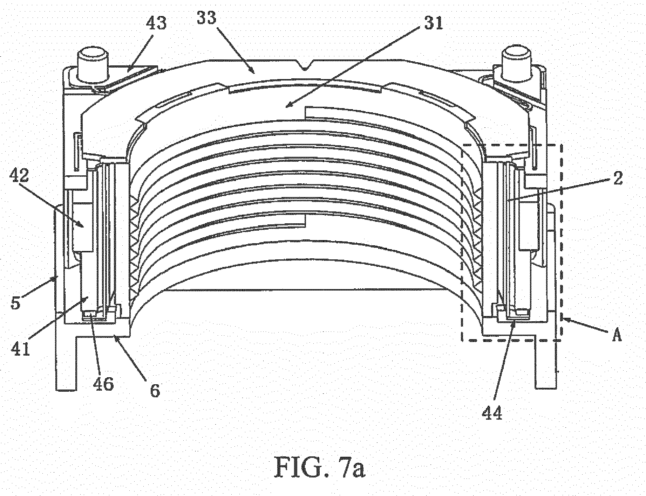

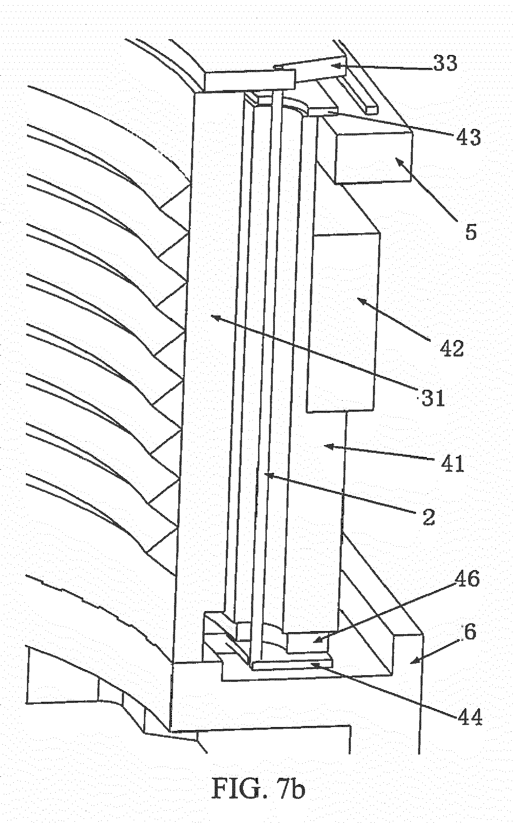

FIG. 7a and FIG. 7b are sectional diagrams of an embodiment of a miniature lens driving apparatus according to the present invention, and are used to describe a string connection manner. In FIG. 7a and FIG. 7b, a lens holder 31 and a string connecting piece 33 belong to an OIS mechanism and are located on a left side of the sectional diagram. In FIG. 7a and FIG. 7b, the lens holder 31 is drawn to be placed on a base of an AF mechanism. It should be noted that the lens holder 31 and a base 6 are not connected. Therefore, the lens holder 31 may move relative to the base 6. In some examples, a gap is disposed between the lens holder 31 and the base 6, that is, the lens holder 31 is not directly placed on the base 6, but instead is suspended above the base 6. In this embodiment, the string connecting piece 33 is fixed at an upper end of the lens holder 31, and a string 2 is connected to the string connecting piece 33. In this embodiment, the other end of the string 2 is connected to a lower spring sheet 44. In another embodiment, the string 2 may be connected to the reinforcing piece 46. In some other embodiments, the string 2 may be directly connected to an AF moving holder 41.

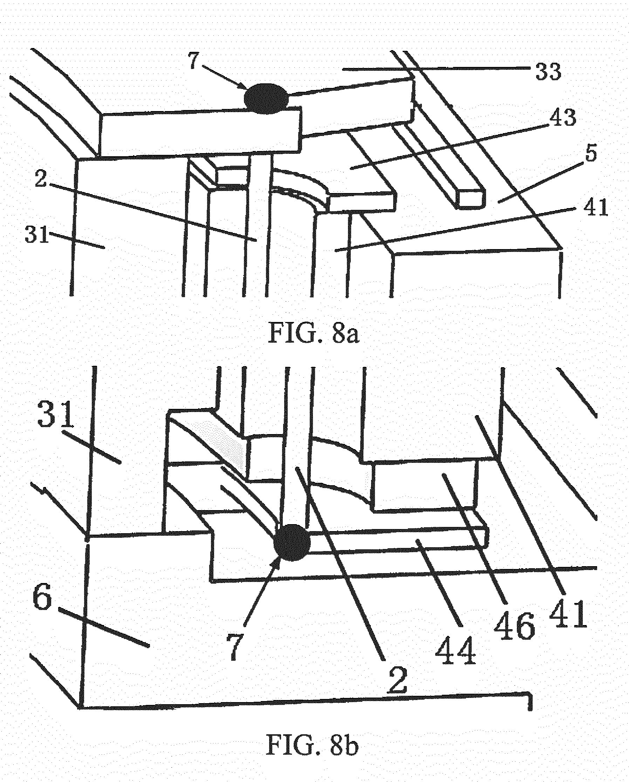

Whether it is a connection manner between a string and a string connecting piece, or a connection manner between a string and a spring sheet, a reinforcing piece and an AF moving holder, various methods that can achieve a secure connection may be used. As shown in FIG. 8a and FIG. 8b, the connection manner may be a manner such as bonding using an adhesive 7, tin soldering or molten welding, or may also be a manner of mechanical bundling.

In this embodiment, the string 2 in the OIS mechanism may use an electrically conductive material or a non-electrically conductive material (that is, an insulating material). The electrically conductive material includes a metal wire, an enameled metal wire, a metal-clad metal wire, a metal-clad plastic wire, an electrically conductive organic fiber wire or combinations thereof. The non-electrically conductive material may include various macromolecule polymer materials, plastic, rubber, various organic fibers, and the like.

The present invention further provides an electronic image-capturing device, which has the miniature lens driving apparatus according to the present invention. The electronic image-capturing device may be, for example, a device that has the miniature lens driving apparatus disclosed in the foregoing embodiment and is used to capture an electronic image, where the device is a camera, video recorder, a smart phone, a photographing header, a monitor, and the like.

The embodiments of the present invention are described above with reference to the accompanying drawings. However, the present invention is not limited to the foregoing specific implementation manners. The foregoing specific implementation manners are exemplary but are not limitative. With the teaching of the present invention, a person of ordinary skill in the art may further make various forms without departing from the purpose and the scope of protection of the claims of the present invention, and these forms all fall within the scope of protection of the present invention.

## Claims

1. A miniature lens driving apparatus, comprising a housing, at least two strings, an optical image stabilization (OIS) mechanism, and an autofocus (AF) mechanism, wherein

   the OIS mechanism comprises a lens holder for holding an imaging lens, at least two coils, and at least one permanent magnet, the at least two coils and the at least one permanent magnet are operatively associated with each other to move the lens holder along a direction substantially perpendicular to an optical axis of the imaging lens;

   the AF mechanism comprises an AF moving holder capable of moving back and forth along a direction of the optical axis, at least one coil, at least one permanent magnet, an upper spring sheet, and a lower spring sheet, the at least one coil and the at least one permanent magnet are operatively associated with each other to move the AF moving holder along the direction of the optical axis;

   an internal connecting portion of the upper spring sheet is connected to an upper end of the AF moving holder, and an outer connecting portion of the upper spring sheet is connected to a stationary part of the AF mechanism; and an internal connecting portion of the lower spring sheet is connected to a lower end of the AF moving holder, and an outer connecting portion of the lower spring sheet is connected to the stationary part of the AF mechanism; and

   one end of each of the at least two strings is connected to the lens holder, and another end of each of the at least two strings is connected to a lower portion of the AF moving holder.

**2.** The miniature lens driving apparatus according to claim 1, wherein an effective elasticity coefficient of the lower spring sheet is greater than an effective elasticity coefficient of the upper spring sheet.

**3.** The miniature lens driving apparatus according to claim 2, wherein a material of the upper spring sheet is different from a material of the lower spring sheet.

**4.** The miniature lens driving apparatus according to claim 2, wherein the upper spring sheet or the lower spring sheet has an integral structure or is formed of multiple independent spring sheet units.

**5.** The miniature lens driving apparatus according to claim 2, wherein the outer connecting portion of the upper spring sheet or the outer connecting portion of the lower spring sheet further comprises an electrode portion for connecting the coil and an external circuit.

**6.** The miniature lens driving apparatus according to claim 1, wherein one end of the string is connected to the lens holder, and another end of the string is connected to the internal connecting portion of the lower spring sheet.

**7.** The miniature lens driving apparatus according to claim 2, wherein the OIS mechanism and the AF mechanism share at least one permanent magnet.

**8.** The miniature lens driving apparatus according to claim 1, wherein the lower end of the AF moving holder is connected to a reinforcing piece for increasing rigidity of the AF moving holder to resist deformation; and the internal connecting portion of the lower spring sheet is connected to the reinforcing piece.

**9.** The miniature lens driving apparatus according to claim 1, wherein a string connecting piece is disposed at an upper end of the lens holder, and an upper end of the string is connected to the string connecting piece.

**10.** The miniature lens driving apparatus according to claim 9, wherein a circuit is disposed on the string connecting piece.

**11.** The miniature lens driving apparatus according to claim 9, wherein the string connecting piece is a printed circuit board in which a circuit is disposed thereon.

**12.** The miniature lens driving apparatus according to claim 1, wherein the string comprises a wire selected from a group consisting of a metal wire, an enameled metal wire, a metal-clad metal wire, a metal-clad plastic wire, an electrically-conductive organic fiber wire, and combinations thereof.

**13.** The miniature lens driving apparatus according to claim 1, wherein a material of the string comprises a material selected from a group consisting of an electrically conductive material, a non-electrically conductive material, a polymer material, plastic, rubber, and organic fibers.

**14.** An electronic image-capturing device, comprising the miniature lens driving apparatus according to any one of claims 1-13.

FIG. 1

FIG. 2a

FIG. 2b

FIG. 2c

FIG. 2d

FIG. 3a

FIG. 3b

FIG. 3c

FIG. 3d

FIG. 4a

FIG. 4b

FIG. 4c

FIG. 5a

FIG. 5b

FIG. 5c

43

2

5

30

42

41

46

44

6

FIG. 6a

FIG. 6b

FIG. 6c

FIG. 7a

FIG. 7b

FIG. 8a

FIG. 8b

Europäisches
Patentamt

European
Patent Office

Office européen
des brevets

# EUROPEAN SEARCH REPORT

**Application Number**

EP 16 17 9495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 012 676 A2 (SUNMING TECHNOLOGIES HK LTD [CN]) 27 April 2016 (2016-04-27) * abstract; figures 1a-1h * * paragraphs [0022], [0023], [0024], [0042], [0043] * ----- | 1,6,8-14 | INV. G03B13/36 G02B7/02 G02B7/09 G02B7/28 G02B27/64 |
| X | US 2015/192799 A1 (MORIYA AKIHIRO [JP] ET AL) 9 July 2015 (2015-07-09) * abstract; figure 7 * | 1,6,8-14 | H04N5/225 G03B3/10 |
| Y | ----- | 2-5,7 | |
| Y | US 2013/208369 A1 (LAM SIO KUAN [HK]) 15 August 2013 (2013-08-15) * abstract; figure 8 * ----- | 2-5,7 | |

**TECHNICAL FIELDS SEARCHED (IPC)**

G03B
G02B
H04N

The present search report has been drawn up for all claims

| Place of search | Date of completion of the search | Examiner |
|---|---|---|
| Munich | 13 December 2016 | Pavón Mayo, Manuel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 17 9495

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2016

| Patent document cited in search report | | | Publication date | Patent family member(s) | | | Publication date |
|---|---|---|---|---|---|---|---|
| EP 3012676 | A2 | | 27-04-2016 | CN | 105785690 | A | 20-07-2016 |
| | | | | CN | 204287690 | U | 22-04-2015 |
| | | | | EP | 3012676 | A2 | 27-04-2016 |
| | | | | US | 2016109681 | A1 | 21-04-2016 |
| US 2015192799 | A1 | | 09-07-2015 | CN | 102472944 | A | 23-05-2012 |
| | | | | CN | 102645815 | A | 22-08-2012 |
| | | | | CN | 104765221 | A | 08-07-2015 |
| | | | | CN | 104793430 | A | 22-07-2015 |
| | | | | CN | 104793431 | A | 22-07-2015 |
| | | | | CN | 104793432 | A | 22-07-2015 |
| | | | | CN | 104793433 | A | 22-07-2015 |
| | | | | CN | 104793434 | A | 22-07-2015 |
| | | | | CN | 104793435 | A | 22-07-2015 |
| | | | | CN | 104793436 | A | 22-07-2015 |
| | | | | CN | 104793437 | A | 22-07-2015 |
| | | | | CN | 104793438 | A | 22-07-2015 |
| | | | | CN | 104793439 | A | 22-07-2015 |
| | | | | CN | 104793440 | A | 22-07-2015 |
| | | | | CN | 104793441 | A | 22-07-2015 |
| | | | | CN | 104793442 | A | 22-07-2015 |
| | | | | CN | 104793443 | A | 22-07-2015 |
| | | | | CN | 104793444 | A | 22-07-2015 |
| | | | | EP | 2469333 | A1 | 27-06-2012 |
| | | | | EP | 2487896 | A1 | 15-08-2012 |
| | | | | EP | 2942664 | A1 | 11-11-2015 |
| | | | | EP | 2942665 | A1 | 11-11-2015 |
| | | | | EP | 2942666 | A1 | 11-11-2015 |
| | | | | EP | 2944992 | A2 | 18-11-2015 |
| | | | | EP | 2944993 | A2 | 18-11-2015 |
| | | | | EP | 2944994 | A2 | 18-11-2015 |
| | | | | EP | 2944995 | A2 | 18-11-2015 |
| | | | | EP | 2945003 | A2 | 18-11-2015 |
| | | | | EP | 2945014 | A2 | 18-11-2015 |
| | | | | EP | 2955571 | A1 | 16-12-2015 |
| | | | | EP | 2955572 | A1 | 16-12-2015 |
| | | | | EP | 2957939 | A2 | 23-12-2015 |
| | | | | EP | 2957940 | A2 | 23-12-2015 |
| | | | | EP | 2960716 | A2 | 30-12-2015 |
| | | | | EP | 2983041 | A2 | 10-02-2016 |
| | | | | EP | 3001244 | A1 | 30-03-2016 |
| | | | | HK | 1212459 | A1 | 10-06-2016 |
| | | | | HK | 1212460 | A1 | 10-06-2016 |
| | | | | HK | 1212461 | A1 | 10-06-2016 |
| | | | | HK | 1212462 | A1 | 10-06-2016 |
| | | | | HK | 1212463 | A1 | 10-06-2016 |

EPO FORM P0459

For more details about this annex : see Official Journal of the European Patent Office, No. 12/82

**EP 3 118 677 A1**

## ANNEX TO THE EUROPEAN SEARCH REPORT
## ON EUROPEAN PATENT APPLICATION NO.

EP 16 17 9495

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2016

| Patent document cited in search report | Publication date | Patent family member(s) | Publication date |
|---|---|---|---|
| | | HK 1212464 A1 | 10-06-2016 |
| | | HK 1212465 A1 | 10-06-2016 |
| | | HK 1212466 A1 | 10-06-2016 |
| | | HK 1212467 A1 | 10-06-2016 |
| | | HK 1212468 A1 | 10-06-2016 |
| | | HK 1212469 A1 | 10-06-2016 |
| | | HK 1212470 A1 | 10-06-2016 |
| | | HK 1212471 A1 | 10-06-2016 |
| | | HK 1212472 A1 | 10-06-2016 |
| | | HK 1212473 A1 | 10-06-2016 |
| | | HK 1212474 A1 | 10-06-2016 |
| | | JP 5846346 B2 | 20-01-2016 |
| | | JP 2011065140 A | 31-03-2011 |
| | | US 2012154614 A1 | 21-06-2012 |
| | | US 2012229901 A1 | 13-09-2012 |
| | | US 2015192754 A1 | 09-07-2015 |
| | | US 2015192785 A1 | 09-07-2015 |
| | | US 2015192786 A1 | 09-07-2015 |
| | | US 2015192787 A1 | 09-07-2015 |
| | | US 2015192788 A1 | 09-07-2015 |
| | | US 2015192789 A1 | 09-07-2015 |
| | | US 2015192790 A1 | 09-07-2015 |
| | | US 2015192791 A1 | 09-07-2015 |
| | | US 2015192792 A1 | 09-07-2015 |
| | | US 2015192793 A1 | 09-07-2015 |
| | | US 2015192794 A1 | 09-07-2015 |
| | | US 2015192795 A1 | 09-07-2015 |
| | | US 2015192796 A1 | 09-07-2015 |
| | | US 2015192797 A1 | 09-07-2015 |
| | | US 2015192798 A1 | 09-07-2015 |
| | | US 2015192799 A1 | 09-07-2015 |
| | | US 2016241788 A1 | 18-08-2016 |
| | | WO 2011021559 A1 | 24-02-2011 |
| US 2013208369 A1 | 15-08-2013 | CN 102375292 A | 14-03-2012 |
| | | US 2013208369 A1 | 15-08-2013 |
| | | WO 2012022270 A1 | 23-02-2012 |

EPO FORM P0459

For more details about this annex : see Official Journal of the European Patent Office, No. 12/82

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510424284